# EUROPÄISCHE PATENTSCHRIFT

(11) **EP 3 835 900 B1**
(45) Veröffentlichungstag und Bekanntmachung des Hinweises auf die Patenterteilung: **06.04.2022**
(21) Anmeldenummer: 19215250.2
(22) Anmeldetag: 11.12.2019
(51) Int. Cl.: G05B 19/418, G01B 21/04

(54) **VERFAHREN UND VORRICHTUNG ZUR PRÜFUNG VON WERKSTÜCKEN**
METHOD AND DEVICE FOR TESTING WORKPIECES
PROCÉDÉ ET DISPOSITIF D'ESSAI DE PIÈCES

(43) Veröffentlichungstag der Anmeldung: 16.06.2021
(73) Patentinhaber: Carl Zeiss Industrielle Messtechnik GmbH, 73447 Oberkochen (DE)
(72) Erfinder: Haas, Günter, 73432 Aalen (DE); Dotschkal, Florian, 73453 Abtsgmünd (DE); Schramm, Tobias, 73569 Eschach (DE)
(74) Vertreter: Patentanwälte Bressel und Partner mbB

(56) Entgegenhaltungen:
- US-A1- 2006 047 457
- US-A1- 2018 267 521

## Beschreibung

Die vorliegende Erfindung betrifft ein Verfahren zur Koordinatenmessung an einer Mehrzahl von Werkstücken und ein Koordinatenmessgerät, das zur Durchführung dieses Verfahrens eingerichtet ist.

Bei der industriellen Fertigung von Werkstücken ist die fortwährende Überwachung der Qualität der Werkstücke wichtig, damit eventuelle Fehler im Produktionsablauf zeitnah entdeckt werden können. Jedoch benötigt die Überwachung der Qualität der Werkstücke eine gewisse Zeit und reduziert somit die Ausbeute des Produktionsablaufs. Es ist daher eine Abwägung zwischen einer notwendigen Kontrolle der Qualität und der gewünschten Ausbeute des Produktionsablaufs zu tätigen.

Eine Form der Qualitätskontrolle besteht in der manuellen Festlegung von Prüfkriterien, z. B. auf Grundlage von Erfahrungswerten eines Anwenders. Als Prüfkriterien können beispielsweise Messpunkte auf einem Werkstück festgelegt werden. Diese Messpunkte werden dann vermessen und mit einem Sollwert verglichen. Sofern alle Messpunkte eine Abweichung zu ihrer Toleranz nicht überschreiten, kann das Werkstück die Qualitätskontrolle bestehen. Bei diesen Verfahren ist die Interaktion eines Anwenders nachteilig, da einerseits ein hohes Anwenderwissen erforderlich ist um die Prüfkriterien festzulegen und andererseits durch den Eingriff des Anwenders eine Fehleranfälligkeit entsteht.

Ferner ist eine Veränderung der Prüfkriterien durch den Anwender, z. B. eine Reduzierung des Prüfumfangs zur Beschleunigung der Prüfung, ebenfalls vom Anwenderwissen abhängig oder kann durch den Anwender gar nicht vorgenommen werden. Dadurch kann ein Zeitbedarf bei der Prüfung einer Vielzahl von Werkstücken nicht reduziert werden.

Weiterhin kann durch den Eingriff eines Anwenders keine vollständige Automatisierung des Produktionsablaufs inklusive Werkstückprüfung erfolgen. Eine automatische Änderung des Prüfungsumfangs an Besonderheiten des Produktionsablaufs kann daher nicht erfolgen.

US 2006/047457 A1 offenbart ein System, ein Verfahren und eine Vorrichtung, um die an hergestellten Teilen durchgeführten Messungen zu priorisieren, während spezifizierte Qualitätsstandards aufrechterhalten werden. Gemäß dem Verfahren, dem System und der Vorrichtung wird der von einem Koordinatenmessgerät verwendete Prozess modifiziert, so dass die Anzahl der durchgeführten Messungen gemäß den Ergebnissen der bereitgestellten Analyse reduziert wird. Ein Koordinatenmessgerät wird gemäß den Analyseergebnissen modifiziert. Ein Verfahren zur Priorisierung der Teilemessung in einem Messsystem und einem Verfahren umfasst das Beschreiben eines Satzes von zu messenden Merkmalen an einer Vielzahl von im Wesentlichen identischen Teilen, das Trennen des Satzes von Merkmalen in empfindliche Merkmale und nicht-empfindliche Merkmale, das Unterteilen der nicht-empfindlichen Merkmale in eine Vielzahl von Gruppen und Priorisieren der Teilmessungen, um die empfindlichen Merkmale zu messen und abwechselnde Messungen der nicht-empfindlichen Merkmale bereitzustellen.

Es ist eine Aufgabe der vorliegenden Erfindung ein Verfahren und eine Vorrichtung zur vereinfachten oder effizienteren Qualitätskontrolle bereitzustellen, das/die insbesondere mindesten einen der oben genannten Nachteile nicht aufweist.

Von der Erfindung wird vorgeschlagen:
Ein Verfahren zur Vermessung einer Mehrzahl von Werkstücken, wobei jedes der Werkstücke mehrere strukturelle Merkmale aufweist, die bei den anderen Werkstücken in gleicher Weise vorhanden sind, und welche zu vermessende Prüfmerkmale sind,
wobei das Verfahren aufweist:
   a) Ermitteln oder Annehmen zumindest eines instabilen Prüfmerkmals, wobei bei dem instabilen Prüfmerkmal eine Verletzung zumindest einer, vorzugsweise vordefinierten, statistische Kontrollregel vorliegt oder angenommen wird,
   b) Ermitteln oder Annehmen zumindest eines stabilen Prüfmerkmals, wobei bei dem stabilen Prüfmerkmal keine Verletzung zumindest einer, vorzugsweise vordefinierten, statistische Kontrollregel vorliegt oder angenommen wird,
   c) Vermessen einer Mehrzahl Werkstücke, wobei das zumindest eine instabile Prüfmerkmal häufiger vermessen wird als das zumindest eine stabile Prüfmerkmal,
   d) Ermitteln, ob bei dem zumindest einen instabilen Prüfmerkmal weiterhin eine Verletzung zumindest einer, vorzugsweise vordefinierten, statistischen Kontrollregel vorliegt, und ob das zumindest eine instabile Prüfmerkmal weiterhin instabil ist und Ermitteln, ob bei dem zumindest einen stabilen Prüfmerkmal weiterhin keine Verletzung zumindest einer, vorzugsweise vordefinierten, statistischen Kontrollregel vorliegt, und ob das zumindest eine stabile Prüfmerkmal weiterhin stabil ist
   und weiterhin aufweisend
   e) Vermessen weiterer Werkstücke wie in c), wenn gemäß dem Ermitteln aus d) das zumindest eine instabile Prüfmerkmal weiterhin instabil ist und das zumindest eine stabile Prüfmerkmal weiterhin stabil ist
   oder, alternativ zu e)
   f) Wiederholen von a) und b), wenn einer oder mehrere der folgenden Fälle auftreten:
      i. wenn gemäß dem Ermitteln aus d) das zumindest eine instabile Prüfmerkmal nicht mehr instabil ist und/oder das zumindest eine stabile Prüfmerkmal nicht mehr stabil ist
      ii. wenn eine Änderung eines Herstellungsprozesses der Werkstücke, eine Änderung bei einem Messverfahren oder eine Änderung von Umgebungsbedingungen erfolgt ist,
      iii. wenn c) über eine vorbestimmte Zeitdauer erfolgt ist,
      iv. wenn c) über eine vorbestimmte Anzahl an Werkstücken erfolgt ist,
      v. wenn eine neue Charge Werkstücke vermessen wird oder werden soll, um zumindest ein instabiles Prüfmerkmal und zumindest ein stabiles Prüfmerkmal neu zu bestimmen,
   und anschließend Wiederholung von c),
wobei anschließend eine Sequenz von d) und danach e) oder f) einfach oder mehrfach wiederholt werden kann. Die Sequenz meint [ d) plus { e) oder f)}]

Hierin und nachfolgend werden die Punkte oder Maßnahmen a) - f) des Verfahrens auch als "Schritte" bezeichnet. In dem Verfahren können die Maßnahmen a) - f) des Verfahrens auch als Schritte bezeichnet werden. Die Benennung mit Buchstaben in alphabetischer Reichenfolge, oder die Bezeichnung als "Schritte" bedeutet nicht, dass solche Schritte zwingend nacheinander und in dieser Reihenfolge ausgeführt werden müssen. Es können andere Reihenfolgen durchgeführt werden, oder es können Maßnahmen zeitgleich erfolgen, wenn dies der Erreichung des Verfahrenszweckes nicht entgegen steht. Beispielsweise können a) und b) gleichzeitig erfolgen oder in beliebiger Reihenfolge durchgeführt werden. Die c) und d) können beispielsweise gleichzeitig erfolgen. Etwas anderes gilt, wenn explizit eine Reihenfolge festgelegt ist. Dies ist keine abschließende Aufzählung der Möglichkeiten. Es kann auch auf den Begriff "Schritt" verzichtet werden, ohne vom Sinn der Erfindung abzuweichen.

Die statistische Kontrollregel in a) und b) kann dieselbe sein, was bevorzugt aber nicht zwingend ist. D.h. es kann sich um verschiedene statistische Kontrollregeln handeln.

Bei dem Ermitteln in d) ob bei dem zumindest einen instabilen Prüfmerkmal weiterhin eine Verletzung zumindest einer statistischen Kontrollregel vorliegt, ist diese statistische Kontrollregel in d) vorzugsweise dieselbe statistische Kontrollregel wie in a).

Bei dem Ermitteln in d) ob bei dem zumindest einen stabilen Prüfmerkmal weiterhin keine Verletzung zumindest einer statistische Kontrollregel vorliegt, ist diese statistische Kontrollregel in d) vorzugsweise dieselbe statistische Kontrollregel wie in b).

Das Verfahren kann fortlaufend bei der Vermessung durchgeführt werden. Die Schritte c) und anschließend die Schritte d) und danach (nach d)) e) oder f) können beliebig oft wiederholt werden.

Die Erfindung verwendet die Erkenntnisse aus der statistischen Prozessverletzung insbesondere, um eine, vorzugsweise dynamische, Prüfschärfe anzupassen und den Prüfumfang am Messgerät neu zu generieren, was vorzugsweise ebenfalls dynamisch erfolgt.

Ein strukturelles Merkmal des Werkstücks kann insbesondere ein Merkmal sein, welches durch einen Fertigungsschritt eines Fertigungsverfahrens, z. B. Gießen, Schmieden, Fräsen, oder Bohren entsteht. Beispielsweise kann ein strukturelles Merkmal eine Lochbohrung, eine Kante, eine Erhöhung, eine Aussparung eine Oberflächenrauheit oder eine beliebige Kombination davon sein.

Ein strukturelles Merkmal des Werkstücks weist vorzugsweise eine oder mehrere zuvor festgelegte Formen auf. Ein strukturelles Merkmal des Werkstücks weist vorzugsweise eine oder mehrere zuvor festgelegte Abmessungen auf.

Die strukturellen Merkmale sind bei allen Werkstücken in gleicher Weise vorhanden. Dies bedeutet z.B., dass jedes Werkstück zumindest denselben Fertigungsschritt durchlaufen hat, durch den das strukturelle Merkmal erzeugt wurde und/oder jedes Werkstück aus demselben Halbzeug besteht. Dementsprechend bedeutet "in gleicher Weise" nicht identisch. Die strukturellen Merkmale sollten im Idealfall in ihren Dimensionen identisch sein, sind es aber praktisch nicht, weshalb die Notwendigkeit der Vermessung zwecks Qualitätskontrolle entsteht. Insbesondere können die strukturellen Merkmale durch Toleranzen des Fertigungsverfahrens/Halbzeugs voneinander abweichen.

Bei den Werkstücken kann es sich hinsichtlich ihrer Geometrie und insbesondere ihrer Sollgeometrie um einander entsprechende Werkstücke handeln.

Das Verfahren kann ein Verfahren zur Koordinatenmessung sein.

Die strukturellen Merkmale sind insbesondere durch Koordinatenmessung zu vermessende oder damit vermessene Prüfmerkmale. Insbesondere kann für die Vermessung ein optisches und/oder taktiles Koordinatenmessgerät oder ein computertomographisches Messsystem verwendet werden.

Jedes strukturelle Merkmal kann ein Prüfmerkmal sein. Insbesondere kann aber auch nur ein Teil der strukturellen Merkmale der Werkstücke ein Prüfmerkmal sein. Es kann erfindungsgemäß nur ein Teil der strukturellen Merkmale vermessen werden.

Jedem Prüfmerkmal kann zumindest ein Messpunkt zugeordnet sein. Jeder Messpunkt kann zumindest einen Koordinatenwert aufweisen, vorzugsweise drei Koordinatenwerte. Ein Messpunkt kann insbesondere durch die charakteristische Form des Prüfmerkmals vorgegeben sein. Beispielsweise kann ein Messpunkt am Rand/Boden einer Bohrung oder der Endpunkt eines erhabenen Bereichs oder Vorsprungs sein.

Insbesondere können mehrere Messpunkte einem Prüfmerkmal derart zugeordnet sein, dass dadurch das Prüfmerkmal annähernd symmetrisch vermessen wird. Ein Beispiel dafür ist die Anordnung von mehreren Messpunkten an einem Rand einer Bohrung in äquidistanten Abständen entlang des Rands.

Beim Annehmen des zumindest einen instabilen Prüfmerkmals, kann beispielsweise aus Erfahrungswerten eines Anwenders eine Anzahl an Prüfmerkmalen angenommen werden, für die eine Instabilität wahrscheinlich ist.

Alternativ kann auch angenommen werden, dass beispielweise alle Prüfmerkmale instabil sind, so dass in einem weiteren Schritt eine komplette Vermessung aller Prüfmerkmale erfolgen kann. Dies ist z. B. vorteilhaft, wenn sich im Herstellungsprozess ein Schritt geändert hat und zur besseren Kontrolle für eine bestimmte Anzahl an Werkstücken alle Prüfmerkmale vermessen werden sollen.

Zum Ermitteln, ob ein Prüfmerkmal stabil oder instabil ist, wird eine Vielzahl gleichartiger Werkstücke vermessen die Prüfmerkmale anhand der statistischen Kontrollregel ausgewertet. Das Kriterium Stabil oder instabil bezieht sich insbesondere auf die Messreihe, die an einer Mehrzahl Werkstücke erfolgt. Das gleiche Prüfmerkmal kann hierbei bei verschiedenen Werkstücken gemessen werden/sein.

Eine statistischen Kontrollregel, kann eine Regeln zur Überwachung sein, oder ein statistisches Kontrollverfahren.

Eine statistische Kontrollregel kann eine der folgenden sein, oder eine beliebige Kombination aus einer oder mehreren der folgenden:
- eine Streuung von Messwerten. Hier kann die Streuung des Prozesses überwacht werden.
- eine oder mehrere Regelkarten. Diese eignen sich zur Überwachung des Prozesses.
- eine oder mehrere Nelson Regeln. Diese eignen sich, um eine Prozessverletzung zu erkennen.
- eine oder mehrere Western Electric Regeln. Diese eignen sich, um eine Prozessverletzung zu erkennen.

Zu der Streuung von Messwerten:
Die Verletzung der statistischen Kontrollregel kann darin bestehen, dass, im Falle der Streuung von Messwerten, bei gleichartigen Werkstücken an dem Prüfmerkmal ermittelte Werte eine Streuung aufweisen, die ein vorgegebenes Maß, eine vorgegebene Toleranz oder eine vorgegebene Grenze überschreitet.

Bei einem stabilen Prüfmerkmal können Messwerte des Prüfmerkmals nicht oder nur innerhalb einer gegebenen Toleranz oder Grenze streuen. Das stabile Prüfmerkmal weist dann stabile Messwerte auf. Ein Anteil Messwerte, insbesondere ein Anteil von höchstens 10% oder höchstens 5% der Messwerte, kann auch außerhalb einer Toleranz oder Grenze liegen. Die Grenze kann z.B. eine Standardabweichung oder ein Vielfaches oder ein Bruchteil davon sein, insbesondere eine Grenze von dreimal der Standardabweichung (3S Grenze).

Bei einem instabilen Prüfmerkmal können Messwerte des Prüfmerkmals stärker als bei dem stabilen Prüfmerkmal streuen, oder außerhalb einer gegebenen Toleranz oder Grenze streuen. Das instabile Prüfmerkmal weist dann instabile Messwerte auf.

Ein Prüfmerkmal ist beispielsweise stabil, wenn bei mehreren Werkstücke ein zugeordneter Wert eines Prüfmerkmals, beispielsweise eine Länge, ein Durchmesser o.ä., innerhalb der 3S - Grenzen (drei Standardabweichungen) liegt. Umgekehrt ist dies bei einem instabilen Prüfmerkmal nicht der Fall.

Zu Nelson Regeln, Western Electric Regeln:
Eine mögliche statistische Kontrollregel sind eine oder mehrere Nelson Regeln, oder eine oder mehrere Western Electric Regeln.

Zur Regelkarte:
Eine statistische Kontrollregel kann auf einer Regelkarte dargestellt sein oder damit überwacht werden.

Zur Ermittlung der Stabilität kann eine statistische Auswertung Verwendung finden.

Ein Sollwert kann insbesondere durch ein CAD-Modell oder durch eine Zeichnungsvorgabe, oder durch generierte Prüflisten aus Prüfplanungssystemen oder aus Erfahrung oder aus Auswertung eines anderen Werkstücks, insbesondere eines Referenz-Werkstücks, definiert sein.

Durch die Ermittlung/Annahme aller instabilen Prüfmerkmale für ein Werkstück, können die übrigen Prüfmerkmale als stabil angenommen werden. Durch die Ermittlung/Annahme aller stabilen Prüfmerkmale für ein Werkstück, können die übrigen Prüfmerkmale als instabil angenommen werden. So kann sich aus der Durchführung von Schritt a) der Schritt b) ergeben, oder umgekehrt.

Insbesondere handelt es bei einem instabilen Prüfmerkmal um einen Bereich eines Werkstücks, bei dem die Wahrscheinlichkeit für Abweichungen, welche dazu führen, dass das Werkstück außerhalb der gewünschten Fertigungsparameter liegt, größer ist als für einen Bereich eines stabilen Prüfmerkmals.

Das Vermessen kann bevorzugt mit einem optischen und/oder taktilen Koordinatenmessgerät erfolgen. Auch andere Prüfverfahren sind möglich, zum Beispiel Computertomografie.

Beim Vermessen eine Mehrzahl an Werkstücken wird das zumindest eine instabile Prüfmerkmal häufiger vermessen als das zumindest eine stabile Prüfmerkmal.

In einer Ausführungsform werden die Werkstücke in einer Serie vermessen, wobei bei einer ersten Anzahl Werkstücke der Serie nur das instabile Prüfmerkmal vermessen wird und bei einer zweiten Anzahl Werkstücke der Serie das instabile Prüfmerkmal und das stabile Prüfmerkmal vermessen werden. Dadurch werden die instabilen Prüfmerkmale häufiger vermessen als die stabilen Prüfmerkmale, nämlich für die erste Anzahl in der Serie und die zweite Anzahl in der Serie, wohingegen die stabilen Prüfmerkmale nur für die zweite Anzahl vermessen werden. Bevorzugt werden die instabilen Prüfmerkmale an allen Werkstücken gemessen. Bevorzugt werden die stabilen Prüfmerkmale nur an jedem z-ten (z = ganze Zahl), beispielsweise jedem zweiten oder dritten oder vierten oder fünften, Werkstück gemessen. Bei allen anderen Werkstücken werden vorzugsweise nur die instabilen Prüfmerkmale gemessen. Besonders bevorzugt werden die stabilen Prüfmerkmale immer nur nach der Vermessung der instabilen Prüfmerkmale von y Werkstücken (y = ganze Zahl), z. B. zwei oder drei oder vier oder fünf Werkstücken, gemessen. Dadurch lässt sich die Anzahl der zu messenden Prüfmerkmale für eine Mehrzahl Werkstücke vorteilhaft reduzieren, was gemäß dieser bevorzugten Ausführungsform ein besonders großer Vorteil der Erfindung ist.

Eine Serie kann bestehen aus:
A) y (erste Anzahl) Werkstücken, bei denen nur das zumindest eine instabile Prüfmerkmal vermessen werden
B) x (zweite Anzahl) Werkstücke, bei denen das zumindest eine instabile
Prüfmerkmal und das zumindest eine stabile Prüfmerkmal vermessen werden wobei x und y eine ganze Zahl ≥ 1 sind, und wobei die Reihenfolge von A) und B) beliebig ist.

Die Serie kann beliebig oft wiederholt werden. Mit anderen Worten kann eine zuerst ein Teil der ersten Anzahl Werkstücke, z. B. fünf Werkstücke, vermessen werden, dann ein Teil der zweiten Anzahl Werkstücke, z. B. ein Werkstück, dann wiederum fünf Werkstücke der ersten Anzahl und wieder ein Werkstück der zweiten Anzahl und so weiter.

Andererseits kann nach einer oder mehrerer Durchführungen einer Serie die Serie beliebig verändert werden, beispielsweise durch Veränderung von x und/oder y oder Veränderung der Reihenfolge A) und B).

In einer Ausführungsform ist die erste Anzahl größer als die zweite Anzahl. Dadurch kann das zumindest eine instabile Prüfmerkmal an mehr als doppelt so vielen Werkstücken wie das zumindest eine stabile Prüfmerkmal gemessen werden.

Sofern sich in Schritt d) ergibt, dass das zumindest eine in Schritt a) und b) ermittelte oder angenommene instabile/stabile Prüfmerkmal weiterhin instabil/stabil ist, werden weitere Werkstücke in Schritt e) mit den schon ermittelten instabilen/stabilen Prüfmerkmalen vermessen. Die Vermessung erfolgt analog zu Schritt c).

Alternativ können auch weitere Werkstücke analog zu Schritt c) vermessen werden, solange zumindest das zumindest eine stabile Prüfmerkmal stabil geblieben ist und das zumindest eine instabile Prüfmerkmal stabil geworden ist bzw. sich als stabil herausgestellt hat.

Alternativ werden die Schritte a) und b) wiederholt sofern eines oder mehrere, in beliebiger Kombination, der oben unter i. - v. genannten Kriterien erfüllt ist. Diese werden nachfolgend erläutert:
Eine Änderung des Herstellungsprozesses des Werkstücks kann insbesondere in der Änderung eines Fertigungsschritts des Herstellungsprozesses bestehen. Beispielhaft kann ein Fertigungsschritt geändert/hinzugefügt/entfernt oder ein Werkzeug zur Fertigung der Werkstücke ausgetauscht/ersetzt werden.

Eine Änderung bei einem Messverfahren kann eine Änderung bei der Koordinatenmessung sein, kann insbesondere in einem Wechsel des Prüfmittels bestehen. Beispielhaft kann ein taktiler oder optischer Sensor ausgetauscht werden.

Eine Änderung der Umgebungsbedingungen ist, ohne Beschränkung, zB eine Änderung von Raumtemperatur, Luftfeuchte und/oder Luftdruck.

Eine Änderung der Umgebungsbedingungen, z. B. der Raumtemperatur, kann sowohl zu einer Beeinflussung des Herstellungsprozesses, als auch zu einer Änderung der Fertigungsqualität führen und/oder zu einer Änderung in den Ergebnissen der Koordinatenmessung. Dementsprechend kann auch abhängig von der Änderung von Umgebungsbedingungen eine Wiederholung der Schritte a) und b) erfolgen.

In noch einer Variante kann die Wiederholung der Schritte a) und b) nach einer bestimmten Zeit erfolgen. Beispielhaft kann nach jedem Schichtwechsel oder jeder Unterbrechung einer Fertigung oder nach einer vordefinierten Zeit von z. B. 24 Stunden eine erneute Ermittlung der instabilen/stabilen Prüfmerkmale erfolgen.

In noch einer Variante kann die Wiederholung der Schritte a) und b) nach einer bestimmten Anzahl an mittels Schritt c) vermessenen Werkstücken erfolgen. Beispielhaft kann nach jedem 10. oder 50. oder 100. Bauteil eine Ermittlung nach Schritt a) und b) erfolgen.

Insbesondere kann die Wiederholung der Schritte a) und b) nach einem Chargenwechsel der Werkstücke erfolgen. Eine Charge ist insbesondere eine Produktionscharge.

Eine Wiederholung der Schritte a) und b) kann vorzugsweise derart erfolgen, dass bei einer Anzahl nachfolgend zu vermessender Werkstücke alle Prüfmerkmale, mit gleicher Häufigkeit vermessen werden, zum Ermitteln zumindest eines instabilen Prüfmerkmals und zumindest eines stabilen Prüfmerkmals. Insbesondere werden von jedem vermessenen Werkstück alle Prüfmerkmale vermessen und aus den daraus erhaltenen Messdaten die stabilen und instabilen Prüfmerkmale erneut ermittelt werden.

Vorteilhaft bei der Erfindung ist, dass äußerer Einflüsse auf den Herstellungsprozess kontrolliert werden können.

In einer Ausführungsform erfolgt in Schritt a) und b) das Ermitteln des zumindest einen stabilen Prüfmerkmals und das Ermitteln des zumindest einen instabilen Prüfmerkmals durch Auswertung eines Datensatzes, der Daten aus einer früheren Vermessung zumindest eines Werkstücks enthält, welches diese Prüfmerkmale aufweist. Insbesondere kann es sich bei der Erzeugung des Datensatzes um einen zusätzlichen Verfahrensschritt handeln, welcher vor dem Schritt a) erfolgt. Insbesondere kann der Datensatz durch Vermessung mittels desselben Koordinatenmessgeräts, welches in Schritt c) verwendet wird, erzeugt werden. Insbesondere kann der Datensatz durch Vermessung von Werkstücken, die die gleichen strukturellen Merkmale aufweisen wie die zu vermessende Werkstücke, erstellt werden.

Der Datensatz kann insbesondere Messwerte und Messpunkte umfassen, wobei jedem Messpunkt durch eine Messung ein Koordinatenwert (Messwert) zugeordnet werden kann. Insbesondere können die Messpunkte Messpunkten von Prüfmerkmalen eines Werkstücks entsprechen.

Der Datensatz kann insbesondere die Messwerte und Messpunkte einer Vielzahl an Werkstücken umfassen, wobei jedem Werkstück eindeutig seine Messpunkte der Prüfmerkmale und die zugehörigen Messwerte zugeordnet sind.

Der Datensatz kann beispielweise in einer Datenbank für eine Mehrzahl an Werkstücken verschiedener Geometrien gespeichert sein. Aus dieser Datenbank kann dann der Datensatz für das Ermitteln in den Schritten a) und b) bezogen werden.

Alternativ können, wie bereits oben erwähnt, die Messwerte des Datensatzes für die Ermittlung in den Schritten a) und b) an zumindest einem Werkstück vor Ausführen der Schritte a) und b) durch das Messsystem, welches auch in Schritt c) verwendet wird, ermittelt worden sein. Bevorzugt können die Messwerte des Datensatzes an einer Vielzahl Werkstücken ermittelt werden.

Bevorzugt kann eine Mehrzahl Werkstücke vor der Ausführung der Schritte a) und b) vermessen werden. Je höher die Anzahl der vermessenen Werkstücke, umso genauer kann die Ermittlung der instabilen/stabilen Prüfmerkmale funktionieren.

Unter der Ermittlung der instabilen/stabilen Prüfmerkmale in Schritt a) und b) und der Verletzung oder Nichtverletzung der statistischen Kontrollregel kann zu verstehen sein, dass eine Abweichung einer statistischen Größe, welche aus der Vielzahl der Werkstücke eines Datensatzes ermittelt wurde, eine vorgegebene Toleranz oder Grenze überschreitet oder nicht überschreitet.

Beispielhaft kann aus dem Messwert eines Messpunkts für alle Werkstücke des Datensatzes ein Mittelwert für den Messpunkt gebildet werden. Bei dem Mittelwert kann dann festgestellt werden, ob er eine Toleranz oder Grenze überschreitet. Beispielsweise kann er mit einem Soll-Mittelwert verglichen werden.

In einer Ausführungsform sind jedem Prüfmerkmal, stabil oder instabil, mehrere Messpunkte zugeordnet und es werden in Schritt c) bei dem instabilen Prüfmerkmal mehrere zugeordnete Messpunkte vermessen und bei dem stabilen Prüfmerkmal weniger zugeordnete Messpunkte vermessen als bei dem instabilen Prüfmerkmal. Durch die Reduzierung der Messpunkte für das stabile Prüfmerkmal kann eine Messzeit zusätzlich verringert werden. Beispielhaft können für ein Prüfmerkmal, welches eine Lochbohrung ist und vier äquidistante Messpunkte entlang des Rands der Lochbohrung aufweist, alle vier Messpunkte vermessen werden, sofern dieses Prüfmerkmal instabil ist und nur noch ein Messpunkt vermessen werden, sofern dieses Prüfmerkmal stabil ist. In umgekehrter Weise kann bei dem instabilen Prüfmerkmal die Anzahl Messpunkte erhöht werden, um ein besseres Messergebnis zu erhalten. Die Reduzierung von Messpunkten bei dem zumindest einen stabilen Merkmal und die Erhöhung von Messpunkten bei dem zumindest einen instabilen Merkmal können sich ausgleichen, sodass man eine gewichtete Qualitätskontrolle erhält, ohne die Messzeit dafür zu erhöhen, oder sogar zu verringern.

In einer weiteren Ausführungsform wird zumindest ein Prüfplan verwendet. Der Prüfplan kann erfindungsgemäß erstellt und bei Bedarf verändert werden. Die Erstellung des zumindest ein Prüfplans kann vorzugsweise nach den Schritten a) und b) erfolgen.

Der Prüfplan umfasst zumindest das zumindest eine instabile Prüfmerkmal. Beispielsweise kann das häufigere Messen des instabilen Prüfmerkmals also im Extremfall bedeuten, dass nur das zumindest eine instabile Prüfmerkmal und kein stabiles Prüfmerkmal vermessen wird.

Bevorzugt kann der Prüfplan lediglich das zumindest eine instabile Prüfmerkmal umfassen und wird dann auch als reduzierter Prüfplan bezeichnet. Durch die Verwendung des reduzierten Prüfplans in Schritt c) können dann zumindest das zumindest eine instabile Prüfmerkmal, oder nur dieses, an einem Werkstück vermessen werden. Beispielsweise könnten alle in Schritt c) zu vermessende Werkstücke mit diesem reduzierten Prüfplan vermessen werden, womit für jedes Werkstück das zumindest eine instabile Prüfmerkmal vermessen wird. Das zumindest eine stabile Prüfmerkmal kann hingegen in dem reduzierten Prüfplan z. B. nicht enthalten sein, wodurch dieses für kein Werkstück vermessen werden kann und somit das zumindest eine instabile Prüfmerkmal häufiger vermessen wird als das zumindest eine stabile Prüfmerkmal, welches im Extremfall gar nicht vermessen wird.

Weiterhin kann noch ein weiterer, nämlich ein vollständiger Prüfplan verwendet werden. Der vollständige Prüfplan enthält das zumindest eine instabile Prüfmerkmal und das zumindest eine stabile Prüfmerkmal.

Der vollständige Prüfplan kann der Prüfplan sein, welcher zur Generierung des Datensatzes verwendet wurde oder in den Schritten a) und b) verwendet wurde. Dieser vollständige Prüfplan kann zur Kontrolle der Einordnung aller Prüfmerkmale in instabil/stabil dienen. Insbesondere kann in Schritt c) mindestens ein Werkstück mit dem vollständigen Prüfplan vermessen werden, und in Schritt d) ermittelt werden inwieweit das zumindest eine stabile Prüfmerkmal noch stabil ist.

Ein Vorteil in der Verwendung des reduzierten Prüfplans kann in der verkürzten Messzeit für den reduzierten Prüfplan im Vergleich zum vollständigen Prüfplan, auf Grund der reduzierten Prüfmerkmale, bestehen, worin ein besonderer Vorteil der Erfindung zu sehen ist.

Durch Wahl eines entsprechenden Prüfplans kann dann für ein Werkstück bestimmt werden, ob beispielweise lediglich die instabilen Prüfmerkmale oder alle Prüfmerkmale vermessen werden. Durch die Kombination verschiedener Prüfpläne, z. B. des vollständigen Prüfplans und des reduzierten Prüfplans kann der messtechnische Aufwand vorteilhaft reduziert werden.

In einer Ausführungsform wird die erste Anzahl Werkstücke der Serie gemäß dem reduzierten Prüfplan vermessen, der lediglich das zumindest eine instabile Prüfmerkmal umfasst, und die zweite Anzahl Werkstücke der Serie gemäß dem vollständigen Prüfplan vermessen, der das zumindest eine instabile Prüfmerkmal und das zumindest eine stabile Prüfmerkmal umfasst.

Insbesondere kann durch die Kombination verschiedener Prüfpläne der in Schritt c) beschriebenen Ablauf, nämlich das Vermessen einer Mehrzahl an Werkstücken, wobei das zumindest eine instabile Prüfmerkmal häufiger vermessen wird als das zumindest eine stabile Prüfmerkmal, vorteilhaft erreicht werden.

Der vollständige und der reduzierte Prüfplan können in beliebiger Reihenfolge der Sequenz zugrunde gelegt werden. Das zumindest eine instabile Prüfmerkmal wird also durch die Kombination des reduzierten Prüfplans mit dem vollständigen Prüfplan häufiger, bevorzugt an jedem Werkstück, vermessen als das zumindest eine stabile Prüfmerkmal.

Eine oben definierte Serie zur Vermessung von Werkstücken kann bestehen aus:
A) y (erste Anzahl) Werkstücken, bei denen nur das zumindest eine instabile Prüfmerkmal gemäß dem reduzierten Prüfplan vermessen wird
B) x (zweite Anzahl) Werkstücke, bei denen das zumindest eine instabile Prüfmerkmal und das zumindest eine stabile Prüfmerkmal gemäß dem vollständigen Prüfplan vermessen werden
wobei x und y eine ganze Zahl ≥ 1 ist, und wobei die Reihenfolge von A) und B) beliebig ist.

Durch das Wechseln zwischen den Prüfplänen kann sich auch die weiter oben beschriebene sequentielle Messung des zumindest einen instabilen Prüfmerkmales und des zumindest einen instabilen Prüfmerkmals in Kombination mit dem zumindest einen stabilen Prüfmerkmale vorteilhaft erzielen lassen.

Ein Prüfplan kann neben Informationen über die zu vermessenden Prüfmerkmale auch noch anderweitige Meßinformationen, Information z. B. über die Fahrwege zwischen den einzelnen Prüfmerkmalen oder Messpunkten der Prüfmerkmalen, umfassen. Dieser Prüfplan kann dann zur Vermessung einer Mehrzahl an Werkstücken verwendet werden.

Insbesondere kann der reduzierte Prüfplan nach den Schritten a) und b) und vor dem Schritt c) erzeugt werden. Der reduzierte Prüfplan kann dann für die Vermessung einer Mehrzahl an Werkstücken in Schritt c) verwendet werden.

In einer Ausführungsform enthält der reduzierte Prüfplan derart ausgestaltete Fahrbefehle für einen Messsensor, dass bei dem Vermessen mit dem Messsensor eine Verringerung der Messzeit durch Reduzierung des Fahrweges erfolgt. Insbesondere kann der reduzierte Prüfplan, beispielsweise im Vergleich zum vollständigen Prüfplan derart gestaltet sein, dass durch die Fahrbefehle eine schnellere Vermessung eines Werkstücks ermöglicht wird. Beispielsweise kann der Prüfplan optimierte Verfahrbewegungen zwischen einzelnen Messpunkten vorgeben, sodass eine Messzeit möglichst gering sein kann. Durch die Optimierung der Fahrbefehle lässt sich eine zusätzliche Zeitersparnis, zur Reduzierung durch die Einsparung von zu vermessenden Prüfmerkmalen, erreichen. Insbesondere kann die Messung von Werkstücken also durch die Minimierung der Prüfmerkmale und die Optimierung der Fahrbefehle im Vergleich zur Messung aller Prüfmerkmale an einem Werkstück zeitlich optimiert werden.

Alternativ kann der Prüfplan aus zwei Teilprüfplänen bestehen. Beispielhaft kann ein erster Teilprüfplan das zumindest eine instabile Prüfmerkmal, insbesondere alle instabilen Prüfmerkmale, umfassen und ein zweiter Teilprüfplan alle Prüfmerkmale (stabil und instabil) umfassen. In anderen Worten kann der erste Teilprüfplan identisch sein mit dem reduzierten Prüfplan und der zweite Teilprüfplan identisch sein mit dem vollständigen Prüfplan. Ein solcher aus zwei Teil-Prüfplänen bestehender Prüfplan wird auch als Gesamt-Prüfplan bezeichnet. Ferner kann der Gesamt-Prüfplan eine Abfolge der Teilprüfpläne festlegen, so dass beispielsweise immer fünf Werkstücke hintereinander mit dem ersten Teilprüfplan vermessen werden, dann ein Werkstück mit zweiten Teilprüfplan, dann wieder fünf Werkstücke mit dem ersten Teilprüfplan und so weiter. Dadurch entfällt ein Wechsel zwischen verschiedenen Prüfplänen und es kann derselbe Effekt erzielt werden wie bei dem zuvor beschriebenen abwechselnden Verwenden des reduzierten Prüfplans und des vollständigen Prüfplans. Durch den Prüfplan können dann auch wieder vorteilhaft die instabilen Prüfmerkmale häufiger, also an mehr Werkstücken, vermessen werden, als die stabilen Prüfmerkmale.

Insbesondere kann nach einem Durchführen von Schritt f) und dem erneuten Durchführen von Schritt a) und Schritt b) ein vor dem Durchführen von Schritt f) erstellter/veränderter Prüfplan als Grundlage zur Erstellung eines weiteren veränderten Prüfplans dienen.

Ein Fahrbefehl kann eine Anweisung an das Messgerät sein, mit dem Schritt c) durchgeführt wird, wobei die Anweisung insbesondere einen Bewegungsablauf des Messgeräts von einem Messpunkt zu einem weiteren Messpunkt definiert. Fahrbefehle können also insbesondere die Bewegungen des Messgeräts zur Vermessung eines Werkstücks steuern.

Weiterhin wird eine Vorrichtung vorgeschlagen, insbesondere ein Koordinatenmessgerät, das zur Durchführung des erfindungsgemäßen Verfahrens eingerichtet ist. Die Vorrichtung kann ein optisches, taktiles oder tomographisches Messystem aufweisen.

In einer Ausführungsform umfasst das Koordinatenmessgerät
- eine Auswertesoftware, die dazu ausgebildet ist, Schritt a) und b) des erfindungsgemäßen Verfahrens durchzuführen und Anweisungen zur Vermessung von Werkstücken zu erzeugen, durch welche in Schritt c) das zumindest eine instabile Prüfmerkmal häufiger vermessen wird als das zumindest eine stabile Prüfmerkmal,
- eine Steuerungssoftware, die dazu ausgebildet ist, die Anweisungen zu empfangen und auf Basis der Anweisungen Schritt c) des Verfahrens zu steuern, und die dazu ausgebildet ist, aus Schritt c) erhaltene Messwerte an die Auswertesoftware zu übergeben.

Die Auswertesoftware ist insbesondere derart ausgebildet, dass diese die Schritte a) und b) sowohl auf Grundlage eines Datensatzes, oder einer Annahme und/oder der aus Schritt c) erhaltenen Messwerte durchführen kann.

Die Steuerungssoftware ist insbesondere dazu eingerichtet, einen erwähnten Prüfplan zu verarbeiten. Die Verarbeitung kann derart sein, dass auf Basis des Prüfplans die Vermessung eines Werkstücks von der Steuerungssoftware gesteuert wird. Die Steuerungssoftware kann weiterhin dazu eingerichtet sein, verschiedene Prüfpläne in einer vorgegebenen Reihenfolge oder Sequenz zu verarbeiten.

Der Prüfplan kann beispielsweise ein reduzierter Prüfplan sein, also nur das zumindest eine instabile Prüfmerkmal umfassen. Die Steuerungssoftware kann dann auf Basis des reduzierten Prüfplans Schritt c) durchführen, wobei das zumindest eine instabile Prüfmerkmal häufiger vermessen wird als das zumindest eine stabile Prüfmerkmal.

In einer weiteren Ausführungsform enthalten die Anweisungen einen reduzierten Prüfplan, der lediglich das zumindest eine instabile Prüfmerkmal enthält, und einen vollständigen Prüfplan enthalten, der sowohl das zumindest eine instabile Prüfmerkmal als auch das zumindest eine stabile Prüfmerkmal enthält, wobei die Auswertesoftware so eingerichtet ist, an die Steuerungssoftware entweder den reduzierten Prüfplan oder den vollständigen Prüfplan zu übergeben, sodass bei einer Vermessung der Werkstücke in Schritt c) des Verfahrens eine ersten Anzahl Werkstücke gemäß dem reduzierten Prüfplan vermessen wird und eine zweite Anzahl Werkstücke gemäß dem vollständigen Prüfplan vermessen wird.

Insbesondere werden durch die Vermessung des zumindest einen instabilen Prüfmerkmals an mehr Werkstücken als das zumindest eine stabile Prüfmerkmal das zumindest eine instabile Prüfmerkmal häufiger vermessen als das zumindest eine stabile Prüfmerkmal.

Die Messabfolge kann beispielsweise durch Teilprüfpläne und eine Abfolge der Teilprüfpläne erzielt werden. Wie oben beschrieben kann ein Gesamt-Prüfplan einen ersten Teilprüfplan, indem lediglich die instabilen Prüfmerkmale umfasst sind und einen zweiten Teilprüfplan, in dem alle Prüfmerkmale umfasst sind, umfassen. Innerhalb des Prüfplans kann dann eine Abfolge der Teilprüfpläne festgelegt sein, z. B sequentielles Vermessen einer Anzahl y Werkstücke mit dem ersten Teilprüfplan und Vermessen einer Anzahl x Werkstücke mit dem zweiten Teilprüfplan. Dadurch werden in vorteilhafterweise die instabilen Prüfmerkmale häufiger vermessen als die stabilen Prüfmerkmale, wobei trotzdem eine Kontrolle der stabilen Prüfmerkmalen erfolgen kann.

In einer weiteren Ausführungsform enthält der reduzierte Prüfplan Fahrbefehle für einen Messsensor, dass bei einer Steuerung des Vermessens mit der Steuerungssoftware eine Verringerung der Messzeit durch Reduzierung des Fahrweges des Messsensors erfolgt.

In einer weiteren Ausführungsform umfasst ein Messsystem zur Durchführung des Verfahrens eine Steuerung und einen Messcomputer, wobei die Auswertesoftware auf der Steuerung oder dem Messcomputer gespeichert sein kann und die Steuerungssoftware auf der Steuerung oder dem Messcomputer gespeichert sein kann.

In einer weiteren Ausführungsform ist die Auswertesoftware weiterhin dazu ausgebildet, Schritt d) des erfindungsgemäßen Verfahrens durchzuführen.

In einer weiteren Ausführungsform ist die Steuerungssoftware derart ausgebildet, dass sie ein externes Signal empfangen und verarbeiten kann. Ein externes Signal wird beispielsweise erzeugt, wenn einer oder mehrere der oben und in Anspruch 1 genannten Fälle i.- v. vorliegt. Beispielsweise kann die Steuerungssoftware durch ein externes Signal Informationen über Änderungen des Fertigungsprozesses und/oder des Vermessen der Werkstücke erhalten. Die Steuerungssoftware könnte dann beispielsweise, um eine Kontrolle des zumindest einen stabilen Prüfmerkmals zu verbessern, die Steuerung des Koordinatenmessgeräts auf Basis des bisher verwendeten Prüfplans/Prüfpläne aussetzen und stattdessen, vorzugsweise für eine vorbestimmte Zahl von Werkstücken, die Vermessung einer Mehrzahl an Werkstücken nur mit dem vollständigen Prüfplan steuern. Dadurch können vorteilhaft Änderungen der Prüfmerkmale durch externe Einflüsse überprüft werden.

Bezüglich der Ausgestaltungsformen der Vorrichtung wird vollinhaltlich auf die Ausführungsformen zum Verfahren verwiesen.

Ausführungsbeispiele der Erfindung werden nun unter Bezugnahme auf die beigefügte Zeichnung beschrieben. Die einzelnen Figuren der Zeichnung zeigen:
- Fig. 1: schematische Darstellung eines Koordinatenmessgeräts gemäß der Erfindung;
- Fig. 2: Ablauf eines erfindungsgemäßen Verfahrens;
- Fig. 3: verschiedene Prüfplanabfolgen in einem erfindungsgemäßen Verfahren.

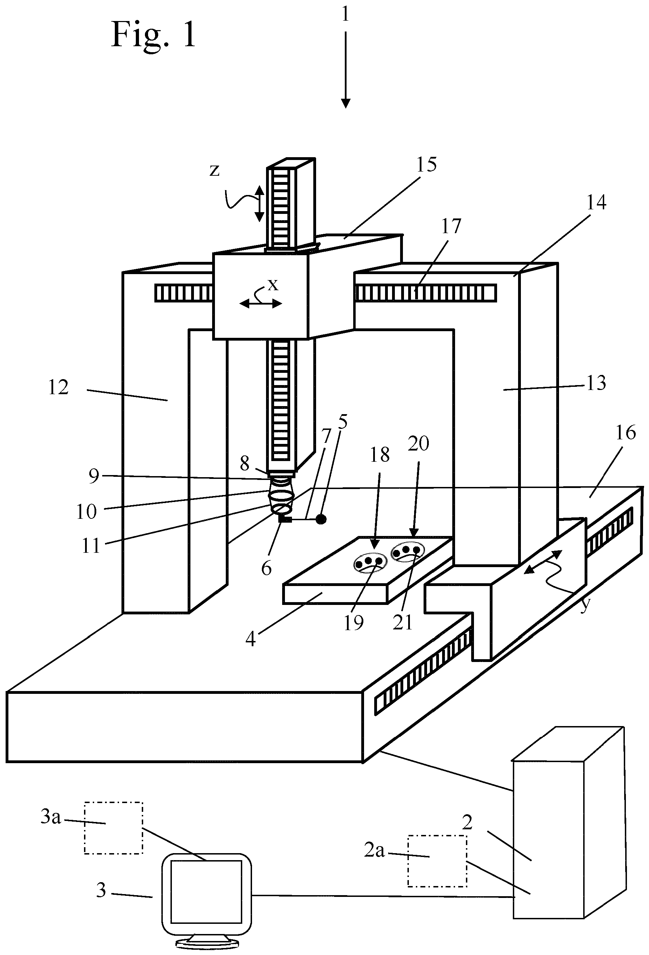

Das in Fig. 1 dargestellte Koordinatenmessgerät (KMG) 1 in Portalbauweise weist einen Messtisch 16 auf, über dem Säulen 12, 13 in Y-Richtung eines kartesischen Koordinatensystems (x, y, z) beweglich angeordnet sind. Die Säulen 12, 13 bilden zusammen mit einem Querträger 14 ein Portal des KMG 1. Der Querträger 14 ist an seinen gegenüberliegenden Enden mit den Säulen 12 bzw. 13 verbunden. Nicht näher dargestellte Elektromotoren verursachen die Linearbewegung der Säulen 12, 13 in y-Richtung, entlang der y-Bewegungs-Achse. Dabei ist z. B. jeder der beiden Säulen 12, 13 ein Elektromotor zugeordnet. Der Querträger 14 ist mit einem Querschlitten 15 kombiniert, welcher luftgelagert entlang dem Querträger 14 in x-Richtung des kartesischen Koordinatensystems beweglich ist. Die momentane Position des Querschlittens 15 relativ zu dem Querträger 14 kann anhand einer Maßstabsteilung 17 festgestellt werden. Die Bewegung des Querschlittens 15 in x-Richtung, d.h. entlang der x-Bewegungs-Achse, wird durch einen weiteren Elektromotor angetrieben. An dem Querschlitten 15 ist eine in vertikaler Richtung bewegliche Pinole 8 gelagert, die an ihrem unteren Ende über eine Montageeinrichtung 9 und eine Drehgelenk 10 mit einem Messkopf 11 verbunden ist. Der Messkopf 11 ist mit einem abgewinkelten Teil 6 verbunden, an dem ein Taststift 7 mit Tastkugel 5 abnehmbar angeordnet ist. Die Pinole 8 kann angetrieben durch einen weiteren Elektromotor relativ zu dem Querschlitten 15 in z-Richtung, entlang der z-Bewegungs-Achse des kartesischen Koordinatensystems bewegt werden. Durch die Elektromotoren des KMG kann der Messkopf 11 in dem Bereich unterhalb des Querträgers 14 in nahezu beliebige Positionen bewegt werden. Ferner kann das Drehgelenk 10 den Messkopf 11 um die Z-Achse drehen, sodass der Taststift 7 in unterschiedliche Richtungen ausgerichtet werden kann. Der Zusammenbau aus Messkopf 11, abgewinkelten Teil 6, Taststift 7 und Tastkugel 5 bildet einen taktilen Sensor.

Die Steuerung 2 ist eingerichtet zur Durchführung einer oder mehrerer der im allgemeinen Beschreibungsteil erläuterten Schritte.

Das Koordinatenmessgerät ist mit der schematisch dargestellten Steuerung 2 und einem schematisch dargestellten Messcomputer 3, auf welchem die Auswertesoftware 3a laufen kann, verbunden.

Weiterhin zeigt die Fig. 1 ein Werkstück 4, welches mit der Tastkugel 5 angetastet bzw. mit dem taktilen Sensor 11, 6, 7, 5 vermessen werden kann. An dem Werkstück 4 befindet sich ein instabiles Prüfmerkmal 18, genauer gesagt eine Lochbohrung 18 und drei der Lochbohrung 18 zugeordnete Messpunkte 19 (aus Gründen der Übersichtlichkeit ist nur ein Messpunkt mit einem Bezugszeichen versehen) und ein stabiles Prüfmerkmal 20, genauer gesagt eine Lochbohrung 18 und drei der Lochbohrung 20 zugeordnete Messpunkte 21 (aus Gründen der Übersichtlichkeit ist nur ein Messpunkt mit einem Bezugszeichen versehen) aufweist. Lochbohrungen sind hier nur beispielhaft und vereinfachend als Prüfmerkmale verwendet. Es ist bei zwei im wesentlichen identischen Lochbohrungen in der Praxis nicht unbedingt davon auszugehen, dass eine davon ein stabiles Prüfmerkmal ist an deiner andere ein instabiles Prüfmerkmal. Jegliche Oberflächenstruktur des Werkstücks, die sich in analoger Weise bei anderen Werkstücken wiederfindet, kann ein Prüfmerkmal sein.

Weitere zu vermessende Werkstücke, welche die gleiche Form aufweisen wie das Werkstück 4, werden mit 4a, 4b.... bezeichnet und sind hier nicht dargestellt.

Das instabile Prüfmerkmal 18 ist beispielsweise deshalb instabil, weil nach Messung bei mehreren gleichartigen Werkstücken sich eine Streuung des Durchmessers der Bohrung derart ergibt, dass nicht alle Durchmesserwerte innerhalb der 3S - Grenzen liegen, was wiederum bei dem stabilen Prüfmerkmal 20 der Fall ist.

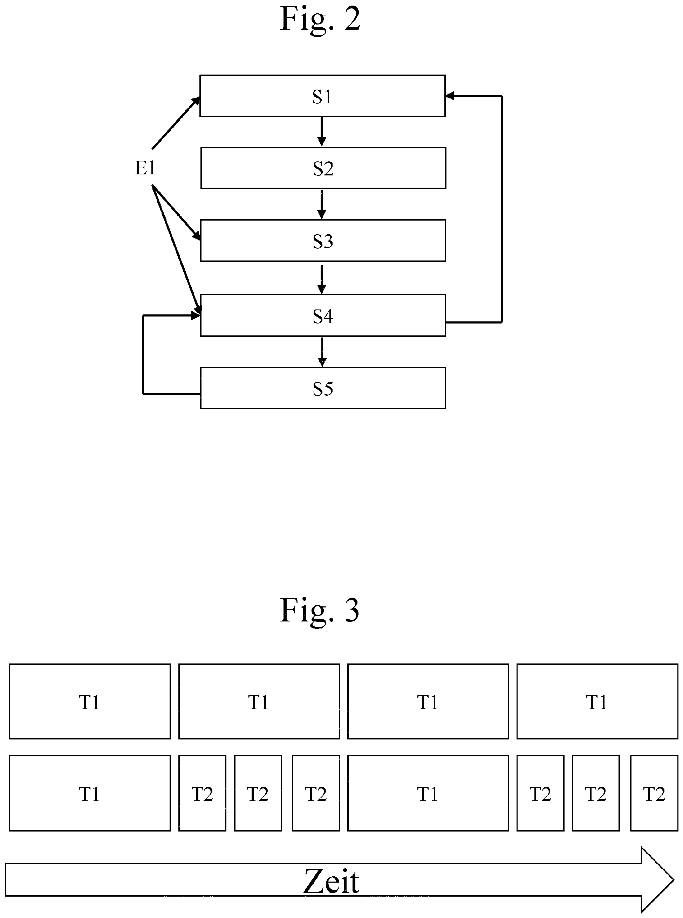

Die Auswertesoftware 3a ist derart ausgebildet, dass Schritt a) und b) gemäß Anspruch 1 (In Figur 2 Schritt S1 und Schritt S2) des erfindungsgemäßen Verfahrens durchführen kann. Die Auswertesoftware 3a gibt dann eine Information an die Steuerung 2 aus, welche zumindest eine Information über das instabile Prüfmerkmal 20, vorzugsweise auch über das instabile Prüfmerkmal 18, enthält.

Die Steuerung 2 steuert die Vermessung des Werkstücks 4 oder anderer Werkstücke, wie für Schritt c) (In Figur 2 Schritt S3) erforderlich, empfängt die Messdaten, z. B. den Messwert für den Messpunkt 21 des instabilen Prüfmerkmals 20, vom Koordinatenmessgerät 1 und kann diese optional speichern. Beispielsweise kann die Steuerung die Messdaten in einem Datensatz, der zur Ausführung der erfindungsgemäßen Schritte a) und b) dienen kann, speichern. Alternativ können die Messdaten von der Steuerung 3 direkt an den Messcomputer 2 weitergeleitet werden. Der Messcomputer 2 kann die Messdaten speichern, z. B. in einem Datensatz. Der Messcomputer 2 kann die Daten auch nach Schritt d) (In Figur 2 Schritt S4) auswerten. Insbesondere kann die Steuerung 2 zur Steuerung der Vermessung die Steuerungssoftware 2a verwenden.

Ergibt die Auswertung im Messcomputer 2 in Schritt d) (Schritt S4), dass die Zuordnung aller Prüfmerkmale in instabil/stabil unverändert ist, gibt der Messcomputer 3 eine Information an die Steuerungssoftware (2a) aus, so dass diese mit Schritt e. fortfährt.

Ergibt die Auswertung im Messcomputer 2 in Schritt d), dass sich die Zuordnung mindestens eines Prüfmerkmals in instabil/stabil verändert hat, führt der Messcomputer 3 in Zusammenwirken mit der Meßsoftware 3a erneut die Schritte a) und b) (S1, S2) aus.

Der Messcomputer 3/die Meßsoftware 3a kann auch einen Prüfplan erstellen, welcher dann an die Steuerung 2 übermittelt wird. Die Verfahrbewegungen des Koordinatenmessgeräts 1, welche durch die Steuerung 2 vorgegeben werden, können dann durch den vom Messcomputer 3 erstellten Prüfplan vorgegeben sein oder daraus ermittelt werden.

Die an Hand von Fig. 1 beschriebenen Ausführungsform ist nur ein Beispiel. In der Praxis kann statt eines Messcomputers ein Computer-Server verwendet werden. Alternativ oder zusätzlich kann auch ein Hand-Held-Computer, wie z. B. ein Smartphone verwendet werden. Auch kann die Steuerung 2 in den Messcomputer 3 integriert sein, bzw. umgekehrt.

Bei der Durchführung des erfindungsgemäßen Verfahrens kann z. B. wie folgt vorgegangen werden. Es wird Bezug genommen auf Fig. 2.

Fig. 2 zeigt ein Blockschaltbild zur Veranschaulichung des Verfahrens. In Schritt S1 werden die instabilen Prüfmerkmale ermittelt oder angenommen.

Bei der Annahme kann ein Anwender auf Grund seiner Erfahrung eine Annahme zu den Prüfmerkmalen, die wahrscheinlich stabil oder instabil sind, treffen.

Bei der Ermittlung kann hingegen auf die Messung einer Mehrzahl von Werkstücken bzw. den Datensatz einer Messung (Messdatensatz) einer Mehrzahl von Werkstücken zurückgegriffen werden.

Die Messung der Mehrzahl von Werkstücken kann insbesondere vor dem Schritt S1 mittels des in dem Verfahren verwendeten Koordinatenmessgeräts oder eines anderen Koordinatenmessgeräts erfolgt sein. Dabei können so viele Werkstücke wie nötig für die korrekte Ermittlung in Schritt S1 vermessen werden. Beispielsweise kann eine statische Auswertung in Schritt S1 eine Mindestanzahl an vermessenen Werkstücken benötigen.

Messdaten aus der Vermessung mit diesem Koordinatenmessgerät 1 werden über die Steuerung 2 an den Messcomputer 3 weitergeleitet. Aus den Messdaten kann weiterhin der Messdatensatz generiert werden, der im Messcomputer 3 gespeichert werden kann und für eine spätere Ermittlung nach Schritt S1 verwendet werden kann.

Alternativ kann zur Ermittlung in Schritt S1 auch ein schon existierender Datensatz verwendet mit Messwerten werden, der z. B. auf dem Messcomputer gespeichert ist. Dieser Datensatz kann aus einer Vermessung mit einem anderen KMG stammen oder aus einer früheren Vermessung mit diesem KMG, die nicht dem erfindungsgemäßen Verfahren unmittelbar vorausgeht.

Insbesondere umfasst ein Datensatz nur Werkstücke derselben Sollform. Insbesondere wird ein Datensatz, der nur Werkstücke mit derselben Sollform umfasst, für die Ermittlung in Schritt S1 für ein Werkstück mit der gleichen Sollform verwendet. Auf dem Messcomputer können also verschiedene Datensätze für verschieden Werkstücke mit verschiedenen Sollformen gespeichert sein. Der Messcomputer verwendet dann für die Ermittlung in Schritt S1 den der Sollform des Werkstücks zugehörigen Datensatz.

Bei dem Ermitteln in Schritt S1 (Schritt a)) und eine Vielzahl gleichartiger Werkstücke vermessen und nach obiger statistischen Regel (3S Grenzen) ein instabiles Prüfmerkmal ermittelt. W.

Nachdem die instabilen Prüfmerkmale ermittelt wurden, werden in Schritt S2 die stabilen Prüfmerkmale ermittelt, ebenfalls unter Zugrundelegung der beispielhaften Regel (3S Grenzen). Hierzu kann genauso verfahren werden wie unter Schritt S1 beschrieben. Die Schritte S1 und S2 können gleichzeitig stattfinden.

Alternativ können für die Ermittlung der stabilen Prüfmerkmale in Schritt S2 auch alle Prüfmerkmale welche in Schritt S1 als instabil zugeordnet wurden, ausgeschlossen werden. Alle verbleibenden Prüfmerkmale, also alle in Schritt S1 nicht als instabil erkannten Prüfmerkmale, werden dann automatisch als stabil zugeordnet.

Die Schritte S1 und S2 werden bevorzugt durch den Messcomputer durchgeführt.

Nach der Klassifizierung der Prüfmerkmale als instabil und stabil wird in Schritt S3 ein Werkstück vermessen.

Für diese Vermessung wird eine Information über das instabile 18 und optional das stabile Prüfmerkmale 20 übermittelt, sodass auf Basis dieser Information das instabile Prüfmerkmal 18 häufiger vermessen werden als das stabile Prüfmerkmal 20.

Die Information kann z. B. in Form eines Prüfplans übermittelt werden. Der Prüfplan umfasst insbesondere Fahrbefehle von einem Messpunkt zu einem anderen Messpunkt, mit denen eine Vermessung eines Werkstücks zeitoptimiert erfolgen kann. Insbesondere wird das Koordinatenmessgerät durch die Information bzw. die Steuerung welche die Information verarbeitet, dazu veranlasst, dass instabile Prüfmerkmal 18 häufiger, also an einer größeren Zahl an Werkstücken 4, als das stabile Prüfmerkmal 20 zu vermessen.

Bei der Vermessung in Schritt S3 wird für jeden vermessenen Messpunkt 19, 21 ein Messwert erzeugt. Die Messwerte werden in einem Datensatz, also jeder Messpunkt 19,21 mit zugehörigem Messwert, für jedes Werkstück abgespeichert.

In Schritt S4 wird aus den in Schritt S3 ermittelten Datensätzen mit dem Messcomputer 3/der Meßsoftware 3a bestimmt, welche Prüfmerkmale 18, 20 instabil oder stabil sind. Sofern in Schritt S4 für alle Prüfmerkmale die gleiche Zuordnung von instabil und stabil erfolgt wie in Schritt S1 und S2 kann ein Schritt S5 durchgeführt werden.

In Schritt S5 werden dann weitere Werkstücke analog zu S3 vermessen.

Sofern sich die Zuordnung mindestens eines Prüfmerkmals bei mindestens einem Werkstück in Schritts S4 im Vergleich zu der Zuordnung in Schritt S1 und Schritt S2 verändert hat, kann erneut mit Schritt S1 begonnen werden. Dies ist der Fall i. aus Anspruch 1. Die erneute Ermittlung eines oder mehrerer instabiler Prüfmerkmale ist durch den Pfeil der von Schritt S4 zu Schritt S1 geht angedeutet.

Bei der Änderung eines instabilen Prüfmerkmals zu einem stabilen Prüfmerkmal könnte mit Schritt S5 weiter verfahren werden.

Alternativ kann auch bei der Änderung eines stabilen Prüfmerkmals zu einem instabilen Prüfmerkmal mit Schritt S5 weiter verfahren werden, sofern dies nur bei einer Anzahl an Werkstücken aus der in Schritt S3 vermessenen Anzahl an Werkstücken erfolgt, die unter einem Schwellwert liegt. Beispielweise könnten in Schritt S3 100 Werkstücke vermessen worden sein und in Schritt S4 wurde durch Einzelauswertung jedes Werkstücks für lediglich ein Werkstück festgestellt, dass für dieses ein stabiles Prüfmerkmal instabil geworden ist, so dass trotzdem mit Schritt S5 weiter verfahren werden kann. Der Schwellwert kann bei einer beliebigen prozentualen Anzahl an Werkstücken liegen. Es kann eine statistische Auswertung erfolgen, in welcher solche einzelnen "Ausreißer" unberücksichtigt bleiben.

Sofern nach Schritt S4 mit Schritt S1 und S2 weiter verfahren wird, können für die Ermittlung der Prüfmerkmale in instabil/stabil die in Schritt S3 ermittelten Daten für die Werkstücke verwendet werden.

Nach Schritt S5 kann Schritt S4 mit den in Schritt S5 ermittelten Datensätzen wiederholt werden. Dies ist durch den Pfeil von Schritt S5 zu Schritt S4 angedeutet. Dieser Ablauf, also die Durchführung von Schritts S4 und S5 im Wechsel kann beliebig lange erfolgen.

Ferner kann durch ein externes Signal E1 in den Verfahrensablauf eingegriffen werden. Das externe Signal E1 zeigt ein Ereignis an, aufgrund dessen gemäß einem der Fälle ii-ii.- v. auch Anspruch 1 eine Wiederholung der Schritte S1 und S2 zu erfolgen hat. Es ist durch dieses externe Ereignis angezeigt, erneut zu ermitteln, welche Prüfmerkmale stabil oder instabil sind.

Eine solche Wiederholung der Schritte S1 und S2 erfolgt vorzugsweise derart, dass bei einer Anzahl nachfolgend zu vermessender Werkstücke alle Prüfmerkmale, mit gleicher Häufigkeit, gemäß einem vollständigen Prüfplan vermessen werden und aus den daraus erhaltenen Messdaten die stabilen und instabilen Prüfmerkmale erneut ermittelt werden.

Beispielsweise kann ein externes Signal E1 eine Information über einen Wechsel eines Werkzeugs für einen Fertigungsschritt enthalten. Durch den Wechsel kann sich z. B. die Genauigkeit in der Fertigung verändern. Alternativ oder zusätzlich kann eine zulässige Fertigungstoleranz verändert werden. Damit kann eine Regel, die in Schritt S1 und Schritt S2 für die Zuordnung der Prüfmerkmal in instabil und stabil benötigt wird, verändert werden. Beispielsweise können Kriterien verschärft werden, eine Instabilität vorliegen, wenn Werte bereits außerhalb einer 2S Grenze liegen. Durch das externe Signal kann dem Messcomputer 3 beispielsweise ein Werkzeugwechsel signalisiert werden, woraufhin der Messcomputer für die Ermittlung der Prüfmerkmale eine Regel verändert.

Genauso kann das externe Signal eine Information über z. B. einen Wechsel des Sensors des Koordinatenmessgeräts 1 enthalten. Diese Information könnte dem Messcomputer 3 ebenso mitgeteilt werden. Durch eine solche Änderung der Messbedingungen ist es angezeigt, die Schritte S1 und S2 erneut vorzunehmen.

Das externe Signal E1 kann z. B. aber auch eine Information über einen Schichtwechsel und damit die Anweisung alle Prüfmerkmale zu vermessen, enthalten. In diesem Fall könnte z. B. durch das externe Signal E1 in Schritt S3 eine Information erfolgen, dass nicht mehr mit dem in Schritt S1 und Schritt S2 ermittelten Information/Prüfplan eine Vermessung in Schritt S3 erfolgen soll, sondern dass stattdessen die Werkstücke in Schritt S3 mit dem vollständigen Prüfplan vermessen werden sollen, damit ein neuer Messdatensatz erzeugt werden kann. Alternativ kann ebenso in Schritt S1 die Regel zur Zuordnung zu stabil oder instabil durch das externe Signal dermaßen verändert werden, dass alle Prüfmerkmale als instabil zugeordnet werden, wodurch in Schritt S3 ebenso alle Prüfmerkmale vermessen werden würden.

Fig. 3 zeigt eine Messserie an Werkstücken, wobei einem Werkstück jeweils ein Prüfplan T1 oder T2 zugeordnet ist.

T1 bedeutet einen vollständigen Prüfplan, bei dem alle stabilen und instabilen Prüfmerkmale vermessen werden.

Hingegen umfasst der reduzierte Prüfplan T2 eine geringere Anzahl an Prüfmerkmalen, beispielsweise nur die instabilen Prüfmerkmale. Dementsprechend wird für die Vermessung eines Werkstücks mit dem Teilprüfplan T2 eine geringere Zeit benötigt als mit dem Prüfplan P1 oder dem Teilprüfplan T1.

In der 1. Reihe der Figur 3 ist gezeigt, dass jedes Werkstück mit dem vollständigen Prüfplan T1 vermessen wird.

In der 2. Reihe der Figur 3 ist hingegen gezeigt, wie sich gemäß der Erfindung ein Wechsel der Prüfpläne T1 und T2 auswirkt. In gezeigter Messserie wird nur jedes vierte Werkstück mit dem vollständigen Prüfplan T1 vermessen, alle anderen Werkstücke mit dem reduzierten Prüfplan T2.

Durch die Kombination des vollständigen Prüfplans T1 und des reduzierten Prüfplans T2 können acht Werkstücke in der gleichen Zeit vermessen werden, in der bei alleiniger Anwendung des vollständigen Prüfplans T1 nur vier Werkstücke vermessen werden können. Damit ergibt sich durch den erstellten Prüfplan eine signifikante Zeitersparnis.

Die Zeitersparnis entsteht also insbesondere durch die Verringerung der zu vermessenden Prüfmerkmale und den angepassten Fahrbefehlen. Insbesondere werden sowohl in dem vollständigen Prüfplan T1 und dem reduzierten Prüfplan T2 die instabilen Prüfmerkmale vermessen und lediglich für den vollständigen Prüfplan T1 auch die stabilen Prüfmerkmale. Es werden also die instabilen Prüfmerkmale häufiger, nämlich an mehr Werkstücken vermessen, als die stabilen Prüfmerkmale.

Insbesondere kann der Messcomputer 3/die Meßsoftware 3a die Prüfplane T1 und T2 an die Steuerung 2 /Steuerungssoftware 2a übergeben. Zusätzlich oder optional kann auch eine Information über eine sequentielle Vermessung einer Mehrzahl an Werkstücken mit den Prüfplänen T1 und T2 an die Steuerung übergeben werden. Beispielsweise kann ein Werkstück mit dem Prüfplan T1 und dann drei Werkstücke mit dem Prüfplan T2 und dann wieder ein Werkstück mit dem Prüfplan T1 und so weiter vermessen werden.

## Patentansprüche

1. Verfahren zur Vermessung einer Mehrzahl Werkstücke (4), wobei jedes der Werkstücke (4) mehrere strukturelle Merkmale aufweist, die bei den anderen Werkstücken (4) in gleicher Weise vorhanden sind, und welche zu vermessende Prüfmerkmale (18, 20) sind,
wobei das Verfahren aufweist:
a) Ermitteln oder Annehmen (S1) zumindest eines instabilen Prüfmerkmals (18; 20), wobei bei dem instabilen Prüfmerkmal eine Verletzung zumindest einer statistische Kontrollregel vorliegt oder angenommen wird,
b) Ermitteln oder Annehmen (S2) zumindest eines stabilen Prüfmerkmals (18; 20), wobei bei dem stabilen Prüfmerkmal keine Verletzung zumindest einer statistische Kontrollregel vorliegt oder angenommen wird,
c) Vermessen (S3) einer Mehrzahl Werkstücke (4), wobei das zumindest eine instabile Prüfmerkmal (20) häufiger vermessen wird als das zumindest eine stabile Prüfmerkmal (18),
**dadurch gekennzeichnet, dass** das Verfahren weiter aufweist:
d) Ermitteln (S4), ob bei dem zumindest einen instabilen Prüfmerkmal (20) weiterhin eine Verletzung zumindest einer statistischen Kontrollregel vorliegt, und damit ob das zumindest eine instabile Prüfmerkmal (21) weiterhin instabil ist, und
Ermitteln, ob bei dem zumindest einen stabilen Prüfmerkmal (18) weiterhin keine Verletzung zumindest einer statistische Kontrollregel vorliegt, und damit ob das zumindest eine stabile Prüfmerkmal (18) weiterhin stabil ist,
und weiterhin aufweisend
e) Vermessen (S5) weiterer Werkstücke (4a, 4b) wie in c), wenn gemäß dem Ermitteln aus d) das zumindest eine instabile Prüfmerkmal (20) weiterhin instabil ist und das zumindest eine stabile Prüfmerkmal (18) weiterhin stabil ist
oder, alternativ zu e)
f) Wiederholen von a) (S1) und b) (S2), wenn einer oder mehrere der folgenden Fälle auftreten:
i. wenn gemäß dem Ermitteln aus d) das zumindest eine instabile Prüfmerkmal (20) nicht mehr instabil ist und/oder das zumindest eine stabile Prüfmerkmal (18) nicht mehr stabil ist,
ii. wenn eine Änderung eines Herstellungsprozesses der Werkstücke (4), eine Änderung bei einem Messverfahren oder eine Änderung von Umgebungsbedingungen erfolgt ist,
iii. wenn c) über eine vorbestimmte Zeitdauer erfolgt ist,
iv. wenn c) über eine vorbestimmte Anzahl an Werkstücken (4) erfolgt ist,
v. wenn eine neue Charge Werkstücke (4) vermessen wird oder werden soll,
um zumindest ein instabiles Prüfmerkmal (20) und zumindest ein stabiles Prüfmerkmal (18) neu zu bestimmen,
und anschließend Wiederholen von c) (S3),
wobei anschließend eine Sequenz von d) und danach e) oder f) einfach oder mehrfach wiederholt werden kann.

2. Verfahren nach Anspruch 1, wobei in c) die Werkstücke (4) in einer Serie vermessen werden, wobei bei einer ersten Anzahl Werkstücke (4) der Serie nur das instabile Prüfmerkmal (20) vermessen wird und bei einer zweiten Anzahl Werkstücke (4) der Serie das instabile Prüfmerkmal (20) und das stabile Prüfmerkmal (18) vermessen werden.

3. Verfahren nach Anspruch 2, wobei die erste Anzahl größer ist als die zweite Anzahl.

4. Verfahren nach Anspruch 2 oder 3, wobei die erste Anzahl Werkstücke (4) der Serie gemäß einem reduzierten Prüfplan (T2) vermessen wird, der lediglich das instabile Prüfmerkmal (20) umfasst, und die zweite Anzahl Werkstücke (4) der Serie gemäß einem vollständigen Prüfplan (T1) vermessen wird, der das instabile Prüfmerkmal (20) und das stabile Prüfmerkmal (18) umfasst.

5. Verfahren nach Anspruch 4, wobei der reduzierte Prüfplan (T2) derart ausgestaltete Fahrbefehle für einen Messsensor enthält, dass bei dem Vermessen mit dem Messsensor eine Verringerung der Messzeit durch Reduzierung des Fahrweges erfolgt.

6. Verfahren nach einem der vorangegangenen Ansprüche, wobei in a) und b) das Ermitteln des zumindest einen stabilen Prüfmerkmals (18) und das Ermitteln des zumindest einen instabilen Prüfmerkmals (20) durch Auswertung eines Datensatzes erfolgt, der Daten aus einer früheren Vermessung zumindest eines Werkstücks (4) enthält, welches diese Prüfmerkmale (18; 20) aufweist.

7. Verfahren nach einem der vorangegangenen Ansprüche, wobei jedem Prüfmerkmal (18, 20) mehrere Messpunkte (19, 21) zugeordnet sind, wobei in c) bei dem instabilen Prüfmerkmal (20) mehrere zugeordnete Messpunkte (21) vermessen werden, und bei dem stabilen Prüfmerkmal (18) weniger zugeordnete Messpunkte (19) vermessen werden als bei dem instabilen Prüfmerkmal (20).

8. Koordinatenmessgerät (1), das zur Durchführung eines Verfahrens nach einem der Ansprüche 1 - 7 eingerichtet ist.

9. Koordinatenmessgerät (1) nach Anspruch 8, umfassend
- eine Auswertesoftware (3a), die dazu ausgebildet ist, a) und b) des erfindungsgemäßen Verfahrens durchzuführen und Anweisungen zur Vermessung von Werkstücken (4) zu erzeugen, durch welche in c) das zumindest eine instabile Prüfmerkmal (20) häufiger vermessen wird als das zumindest eine stabile Prüfmerkmal (18),
- eine Steuerungssoftware (2a), die dazu ausgebildet ist, die Anweisungen zu empfangen und auf Basis der Anweisungen c) des Verfahrens zu steuern, und die dazu ausgebildet ist, aus c) erhaltene Messwerte an die Auswertesoftware (3a) zu übergeben.

10. Koordinatenmessgerät (1) nach Anspruch 9, wobei die Anweisungen einen reduzierten Prüfplan (T2) enthalten, der lediglich das instabile Prüfmerkmal (20) enthält, und einen vollständigen Prüfplan (T1) enthalten, der sowohl das instabile Prüfmerkmal (20) als auch das stabile Prüfmerkmal (18) enthält,
wobei die Auswertesoftware (3a) eingerichtet ist, an die Steuerungssoftware (2a) entweder den reduzierten Prüfplan (T2) oder den vollständigen Prüfplan (T1) zu übergeben, sodass bei einer Vermessung der Werkstücke (4) in c) des Verfahrens eine erste Anzahl Werkstücke (4) gemäß dem reduzierten Prüfplan (T2) vermessen wird und eine zweite Anzahl Werkstücke (4) gemäß dem vollständigen Prüfplan (T1) vermessen wird.

11. Koordinatenmessgerät (1) nach Anspruch 10, wobei der reduzierte Prüfplan (T2) derart ausgestaltete Fahrbefehle für einen Messsensor enthält, dass bei einer Steuerung des Vermessens mit der Steuerungssoftware (2a) eine Verringerung der Messzeit durch Reduzierung des Fahrweges des Messsensors erfolgt.

12. Koordinatenmessgerät (1) nach einem der Ansprüche 9-11, umfassend eine Steuerung (2) und einen Messcomputer (3), wobei die Auswertesoftware (3a) auf der Steuerung (2) oder dem Messcomputer (3) gespeichert ist und die Steuerungssoftware (2a) auf der Steuerung (2) oder dem Messcomputer (3) gespeichert ist.

13. Koordinatenmessgerät (1) nach einem der Ansprüche 9-12, wobei die Auswertesoftware (3a), weiterhin dazu ausgebildet ist, d) des Verfahrens nach Anspruch 1 durchzuführen.

## Claims

1. Method for measuring a plurality of workpieces (4), wherein each of the workpieces (4) has a plurality of structural features that are equally present in the other workpieces (4) and are test features (18, 20) that are to be measured,
wherein the method includes:
a) ascertaining or assuming (S1) at least one unstable test feature (18; 20), wherein a violation of at least one statistical control rule is present or assumed for the unstable test feature,
b) ascertaining or assuming (S2) at least one stable test feature (18; 20), wherein no violation of at least one statistical control rule is present or assumed for the stable test feature,
c) measuring (S3) a plurality of workpieces (4), wherein the at least one unstable test feature (20) is measured more frequently than the at least one stable test feature (18),
**characterized in that** the method further includes:
d) ascertaining (S4) whether a violation of at least one statistical control rule continues to be present for the at least one unstable test feature (20) and thus whether the at least one unstable test feature (21) continues to be unstable, and
ascertaining whether a violation of at least one statistical control rule continues to not be present for the at least one stable test feature (18) and thus whether the at least one stable test feature (18) continues to be stable,
and furthermore including
e) measuring (S5) further workpieces (4a, 4b) as in c), if, based on the ascertainment in d), the at least one unstable test feature (20) continues to be unstable and the at least one stable test feature (18) continues to be stable,
or, as an alternative to e),
f) repeating a) (S1) and b) (S2) if one or more of the following cases occur:
i. if, based on the ascertainment in d), the at least one unstable test feature (20) is no longer unstable and/or the at least one stable test feature (18) is no longer stable,
ii. if a change in a production process of the workpieces (4), a change in a measurement method, or a change in environmental conditions has occurred,
iii. if c) has been performed for a predetermined time period,
iv. if c) has been performed on a predetermined number of workpieces (4),
v. if a new batch of workpieces (4) is measured or is to be measured,
in order to newly determine at least one unstable test feature (20) and at least one stable test feature (18), and subsequently repeating c) (S3),
wherein, subsequently, a sequence of d) and then e) or f) can be repeated once or multiple times.

2. Method according to Claim 1, wherein, in c), the workpieces (4) in a series are measured, wherein only the unstable test feature (20) is measured for a first number of workpieces (4) of the series, and the unstable test feature (20) and the stable test feature (18) are measured for a second number of workpieces (4) of the series.

3. Method according to Claim 2, wherein the first number is greater than the second number.

4. Method according to Claim 2 or 3, wherein the first number of workpieces (4) of the series are measured according to a reduced test plan (T2) encompassing only the unstable test feature (20), and the second number of workpieces (4) of the series are measured according to a complete test plan (T1) encompassing the unstable test feature (20) and the stable test feature (18).

5. Method according to Claim 4, wherein the reduced test plan (T2) contains movement commands for a measurement sensor that are such that, during the measurement with the measurement sensor, a decrease in the measurement time takes place due to a reduction in the movement path.

6. Method according to one of the preceding claims, wherein a) and b) include ascertaining the at least one stable test feature (18) and ascertaining the at least one unstable test feature (20) by evaluating a data set containing data from an earlier measurement of at least one workpiece (4) having said test features (18; 20).

7. Method according to one of the preceding claims, wherein each test feature (18, 20) is assigned a plurality of measurement points (19, 21), wherein in step c), a plurality of assigned measurement points (21) are measured for the unstable test feature (20) and fewer assigned measurement points (19) are measured for the stable test feature (18) than for the unstable test feature (20).

8. Coordinate measuring machine (1), which is set up for performing a method according to one of Claims 1-7.

9. Coordinate measuring machine (1) according to Claim 8, comprising
- evaluation software (3a) designed to perform a) and b) of the method according to the invention and to generate instructions for measuring workpieces (4), by way of which the at least one unstable test feature (20) is measured in c) more frequently than the at least one stable test feature (18),
- controlling software (2a) that is designed to receive the instructions and to control c) of the method based on the instructions and is designed to transfer measurement values obtained from c) to the evaluation software (3a).

10. Coordinate measuring machine (1) according to Claim 9, wherein the instructions contain a reduced test plan (T2) that contains only the unstable test feature (20), and a complete test plan (T1) that contains both the unstable test feature (20) and the stable test feature (18),
wherein the evaluation software (3a) is set up to transfer either the reduced test plan (T2) or the complete test plan (T1) to the controlling software (2a) such that, when the workpieces (4) are measured in c) of the method, a first number of workpieces (4) are measured according to the reduced test plan (T2) and a second number of workpieces (4) are measured according to the complete test plan (T1).

11. Coordinate measuring machine (1) according to Claim 10, wherein the reduced test plan (T2) contains movement commands for a measurement sensor that are such that, when the measurement is controlled with the controlling software (2a), a decrease in the measurement time takes place due to a reduction in the movement path of the measurement sensor.

12. Coordinate measuring machine (1) according to one of Claims 9-11, comprising a controller (2) and a measurement computer (3), wherein the evaluation software (3a) is stored on the controller (2) or the measurement computer (3) and the controlling software (2a) is stored on the controller (2) or the measurement computer (3).

13. Coordinate measuring machine (1) according to one of Claims 9-12, wherein the evaluation software (3a) is further designed to perform d) of the method according to Claim 1.

## Revendications

1. Procédé permettant de mesurer une pluralité de pièces (4), chacune des pièces (4) présentant plusieurs caractéristiques structurelles qui existent de même sur les autres pièces (4) et qui sont des caractéristiques de vérification (18, 20) à mesurer,
le procédé présentant les étapes consistant à :
a) déterminer ou supposer (S1) au moins une caractéristique de vérification instable (18 ; 20), une violation d'au moins une règle de contrôle statistique étant donnée ou supposée pour la caractéristique de vérification instable,
b) déterminer ou supposer (S2) au moins une caractéristique de vérification stable (18 ; 20), aucune violation d'au moins une règle de contrôle statistique n'étant donnée ni supposée pour la caractéristique de vérification stable,
c) mesurer (S3) une pluralité de pièces (4), ladite au moins une caractéristique de vérification instable (20) étant mesurée plus souvent que ladite au moins une caractéristique de vérification stable (18),
**caractérisé en ce que** le procédé présente en outre les étapes consistant à :
d) déterminer (S4) si pour ladite au moins une caractéristique de vérification instable (20), il existe toujours une violation d'au moins une règle de contrôle statistique, et donc si ladite au moins une caractéristique de vérification instable (21) est toujours instable, et
déterminer si pour ladite au moins une caractéristique de vérification stable (18), il n'existe toujours pas de violation d'au moins une règle de contrôle statistique, et donc si ladite au moins une caractéristique de vérification stable (18) est toujours stable,
et présentant en outre les étapes consistant à
e) mesurer (S5) d'autres pièces (4a, 4b) comme à l'étape c) si selon la détermination de l'étape d) ladite au moins une caractéristique de vérification instable (20) est toujours instable et ladite au moins une caractéristique de vérification stable (18) est toujours stable, ou en variante à l'étape e)
f) répéter les étapes a) (S1) et b) (S2) si un ou plusieurs des cas suivants se présentent :
i. si selon la détermination de l'étape d), ladite moins une caractéristique de vérification instable (20) n'est plus instable et/ou ladite au moins une caractéristique de vérification stable (18) n'est plus stable,
ii. si un changement d'un processus de fabrication des pièces (4), un changement d'un procédé de mesure ou un changement des conditions environnantes est survenu,
iii. si l'étape c) a été effectuée pendant une durée prédéterminée,
iv. si l'étape c) a été effectuée pour un nombre prédéterminé de pièces (4),
v. si un nouveau lot de pièces (4) est mesuré ou doit être mesuré,
afin de spécifier à nouveau au moins une caractéristique de vérification instable (20) et au moins une caractéristique de vérification stable (18),
et ensuite répéter l'étape c) (S3),
une séquence de l'étape d) et ensuite de l'étape e) ou f) pouvant ensuite être répétée une ou plusieurs fois.

2. Procédé selon la revendication 1, dans lequel à l'étape c), les pièces (4) sont mesurées dans une série, dans lequel, pour un premier nombre de pièces (4) de la série, seule la caractéristique de vérification instable (20) est mesurée, et pour un deuxième nombre de pièces (4) de la série, la caractéristique de vérification instable (20) et la caractéristique de vérification stable (18) sont mesurées.

3. Procédé selon la revendication 2, dans lequel le premier nombre est supérieur au deuxième nombre.

4. Procédé selon la revendication 2 ou 3, dans lequel le premier nombre de pièces (4) de la série est mesuré selon un plan de vérification réduit (T2) qui ne comprend que la caractéristique de vérification instable (20), et le deuxième nombre de pièces (4) de la série est mesuré selon un plan de vérification complet (T1) qui comprend la caractéristique de vérification instable (20) et la caractéristique de vérification stable (18).

5. Procédé selon la revendication 4, dans lequel le plan de vérification réduit (T2) contient des commandes de déplacement pour un capteur de mesure, configurées de telle sorte que lors de la mesure avec le capteur de mesure, une diminution du temps de mesure est effectuée par une réduction du trajet.

6. Procédé selon l'une quelconque des revendications précédentes, dans lequel aux étapes a) et b), la détermination de ladite au moins une caractéristique de vérification stable (18) et la détermination de ladite au moins une caractéristique de vérification instable (20) sont effectuées par l'évaluation d'un enregistrement de données qui contient des données d'une mesure antérieure d'au moins une pièce (4) qui présente cette caractéristiques de vérification (18 ; 20) .

7. Procédé selon l'une quelconque des revendications précédentes, dans lequel plusieurs points de mesure (19, 21) sont associés à chaque caractéristique de vérification (18, 20), dans lequel à l'étape c), plusieurs points de mesure associés (21) sont mesurés pour la caractéristique de vérification instable (20), et pour la caractéristique de vérification stable (18), un nombre de points de mesure associés (19) inférieur à celui pour la caractéristique de vérification instable (20) est mesuré.

8. Appareil de mesure de coordonnées (1), qui est conçu pour exécuter un procédé selon l'une quelconque des revendications 1 à 7.

9. Appareil de mesure de coordonnées (1) selon la revendication 8, comprenant
- un logiciel d'évaluation (3a) qui est réalisé pour exécuter les étapes a) et b) du procédé selon l'invention et pour générer des instructions pour mesurer des pièces (4), par lesquelles à l'étape c) ladite au moins une caractéristique de vérification instable (20) est mesurée plus souvent que ladite au moins une caractéristique de vérification stable (18),
- un logiciel de commande (2a) qui est réalisé pour recevoir les instructions et pour commander sur la base des instructions l'étape c) du procédé, et qui est réalisé pour transmettre au logiciel d'évaluation (3a) des valeurs de mesure obtenues à l'étape c).

10. Appareil de mesure de coordonnées (1) selon la revendication 9, dans lequel les instructions contiennent un plan de vérification réduit (T2) qui ne contient que la caractéristique de vérification instable (20), et un plan de vérification complet (T1) qui contient à la fois la caractéristique de vérification instable (20) et la caractéristique de vérification stable (18),
le logiciel d'évaluation (3a) étant conçu pour transmettre au logiciel de commande (2a) soit le plan de vérification réduit (T2), soit le plan de vérification complet (T1) de sorte que lors d'une mesure des pièces (4) à l'étape c) du procédé, un premier nombre de pièces (4) est mesuré selon le plan de vérification réduit (T2), et un deuxième nombre de pièces (4) est mesuré selon le plan de vérification complet (T1).

11. Appareil de mesure de coordonnées (1) selon la revendication 10, dans lequel le plan de vérification réduit (T2) contient des commandes de déplacement pour un capteur de mesure, configurées de telle sorte que lors d'une commande de la mesure par le logiciel de commande (2a), une diminution du temps de mesure est effectuée par la réduction du trajet du capteur de mesure.

12. Appareil de mesure de coordonnées (1) selon l'une quelconque des revendications 9 à 11, comprenant un dispositif de commande (2) et un ordinateur de mesure (3), le logiciel d'évaluation (3a) étant stocké sur le dispositif de commande (2) ou l'ordinateur de mesure (3) et le logiciel de commande (2a) étant stocké sur le dispositif de commande (2) ou l'ordinateur de mesure (3) .

13. Appareil de mesure de coordonnées (1) selon l'une quelconque des revendications 9 à 12, dans lequel le logiciel d'évaluation (3a) est en outre réalisé pour exécuter l'étape d) du procédé selon la revendication 1.
